# EUROPÄISCHE PATENTANMELDUNG

(11) **EP 0 838 433 A1**
(43) Veröffentlichungstag der Anmeldung: **29.04.1998**
(21) Anmeldenummer: 97890180.9
(22) Anmeldetag: 11.09.1997
(51) Int. Cl.: C02F 1/42

(54) **Verfahren und Vorrichtung zum Enthärten von Wasser**

(30) Priorität: 22.10.1996 AT 1852/96
(71) Anmelder: Weissenbacher, Andreas, 5324 Hintersee (AT); Oberhauser, Ernst, 5440 Golling (AT)
(72) Erfinder: Weissenbacher, Andreas, 5324 Hintersee (AT); Oberhauser, Ernst, 5440 Golling (AT)
(74) Vertreter: Atzwanger, Richard, Dipl.-Ing. Patentanwalt

(57) **Zusammenfassung**

Verfahren und Vorrichtung zum Enthärten von Wasser durch Führung des Wassers durch ein Austauscherharz, welches im Wasser befindliche Salze, insbesondere Calcium und Magnesium, aufnimmt, und zum Regenerieren des mit Salzen, insbesondere Calcium und Magnesium, beladenen Austauscherharzes mittels einer wäßrigen Alkalichloridlösung, insbesondere einer Natriumchloridlösung, welche durch das Austauscherharz hindurchgeleitet wird, wodurch die Salze durch ein Alkali, insbesondere durch Natrium, ersetzt werden, sowie anschließendes Spülen des Austauscherharzes zur Entfernung von in diesem befindlichen Alkalichlorid, insbesondere Natriumchlorid und Calciumchlorid, wobei zur Herstellung der wäßrigen Alkalichloridlösung, insbesondere Natriumchloridlösung, und für den Spülvorgang durch dieses Verfahren erzeugtes enthärtetes Wasser herangezogen wird (Fig. 2).

## Beschreibung

Die gegenständliche Erfindung betrifft ein Verfahren zum Enthärten von Wasser durch Führung des Wassers durch ein Austauscherharz, welches im Wasser befindliche Salze, insbesondere Calcium und Magnesium, aufnimmt, und zum Regenerieren des mit Salzen, insbesondere Calcium und Magnesium, beladenen Austauscherharzes mittels einer wäßrigen Alkalichloridlösung, insbesondere einer Natriumchloridlösung, welche durch das Austauscherharz hindurchgeleitet wird, wodurch die Salze durch ein Alkali, insbesondere durch Natrium, ersetzt werden, sowie anschließendes Spülen des Austauscherharzes zur Entfernung von in diesem befindlichen Alkalichlorid, insbesondere Natriumchlorid und Calciumchlorid.
Die gegenständliche Erfindung betrifft weiters eine Vorrichtung zur Durchführung dieses Verfahrens.

Es ist bekannt, Wasser dadurch zu enthärten, daß es durch ein Austauscherharz hindurchgeleitet wird, wodurch dem harten Wasser in diesem befindliche Salze, insbesondere Calcium und Magnesium, dadurch entzogen werden, daß sie an das Austauscherharz gebunden werden. Sobald die Wirkung des Austauscherharzes erschöpft ist, wird durch dieses eine wäßrige Alkalichloridlösung, insbesondere eine wäßrige Natriumchloridlösung, hindurchgeleitet, wodurch die im Austauscherharz befindlichen Salze, insbesondere Calcium und Magnesium, durch Alkali, insbesondere Natrium, ersetzt werden. Die hierdurch entstehende Alkalichloridlösung, insbesondere Calciumchloridlösung, wird in einen Abwasserkanal abgeleitet. In der Folge wird weiters das Austauscherharz mit Wasser gespült, wodurch die in diesem befindliche Alkalichloride, insbesondere Calciumchloride, und überschüssiges Natriumchlorid, entfernt werden, welche gleichfalls in einen Abwasserkanal abgeleitet werden.

Bei diesem bekannten Verfahren wird für die Herstellung der wäßrigen Alkalichloridlösung, insbesondere Natriumchloridlösung, zur Regenerierung des Austauscherharzes und zur nachfolgenden Spülung des Austauscherharzes nicht enthärtetes Wasser verwendet. Dieser Vorgangsweise haftet jedoch der Nachteil an, daß hierdurch sowohl während des Regenerierens als auch während des Spülens im Wasser befindliche Salze, insbesondere Calcium und Magnesium, in das Austauscherharz gelangen, wodurch das Austauscherharz teilweise mit Salzen, insbesondere mit Calcium und mit Magnesium, beladen wird. Um somit die für einen gegebenen Wasserdurchsatz erforderliche Kapazität des Austauscherharzes zu erzielen, muß eine Mindestmenge an Austauscherharz zur Verfügung stehen.

Der gegenständlichen Erfindung liegt somit die Aufgabe zugrunde, ein Verfahren zu schaffen, durch welches während des Regeneriervorganges und des Spülvorganges eine Beladung des Austauscherharzes mit Salzen, insbesondere mit Calcium und Magnesium, vermieden wird. Dies wird erfindungsgemäß dadurch erzielt, daß zur Herstellung der wäßrigen Alkalichloridlösung, insbesondere der wäßrigen Natriumchloridlösung, und für den Spülvorgang durch dieses Verfahren erzeugtes enthärtetes Wasser herangezogen wird. Da hierdurch während des Regeneriervorganges und des Spülvorganges des Austauscherharzes keine Beladung des Austauscherharzes mit Salzen erfolgt, steht dieses vollständig für den Enthärtungsvorgang zur Verfügung, wodurch die für einen gegebenen Wasserdurchsatz erforderliche Menge an Austauscherharz maßgeblich vermindert werden kann.

Gemäß einem bekannten Verfahren zum Enthärten von Wasser wird dieses durch ein erstes Austauscherharz hindurchgeleitet, wodurch das Wasser enthärtet wird, und wird gleichzeitig ein zweites Austauscherharz durch Hindurchleiten einer wäßrigen Alkalichloridlösung, insbesondere einer wäßrigen Natriumchloridlösung, regeneriert und nachfolgend durch Hindurchleiten von Wasser gespült. Sobald das erste Austauscherharz erschöpft ist, wird das Wasser im zweiten Austauscherharz enthärtet und wird das erste Austauscherharz regeneriert und gespült. Aufgrund dieses sogenannten Pendelverfahrens kann mittels einer derartigen Anlage ununterbrochen Wasser enthärtet werden.

Dieses Verfahren wird erfindungsgemäß dadurch verbessert, daß nicht enthärtetes Wasser durch ein erstes Austauscherharz hindurchgeleitet wird und daß ein Teil des hierdurch erzeugten enthärtetes Wassers zur Herstellung einer wäßrigen Alkalichloridlösung, insbesondere einer wäßrigen Natriumchloridlösung, herangezogen wird, welche durch ein zweites Austauscherharz hindurchgeleitet wird sowie in der Folge mittels eines Teiles des im ersten Austauscherharz erzeugten enthärteten Wassers die Spülung des zweiten Austauscherharzes erfolgt und daß nach der Erschöpfung des ersten Austauscherharzes das nicht enthärtete Wasser durch das zweite Austauscherharz hindurchgeleitet wird und ein Teil des hierdurch erzeugten enthärteten Wassers zur Regenerierung und Spülung des ersten Austauscherharzes herangezogen wird.

Vorzugsweise erfolgt dabei in an sich bekannter Weise die Regenerierung des jeweiligen Austauscherharzes im Gleichstrom und die Spülung im Gegenstrom.

Eine bekannte Vorrichtung zum Enthärten von Wasser mittels eines Austauscherharzes weist zwei Behälter auf, in welchen sich jeweils Austauscherharz befindet, und enthält weiters ein mit mindestens einem Steuerschieber ausgebildetes Steuergerät, mit welchem die Anschlußleitungen der beiden Behälter verbunden sind, und sind das Steuergerät und der mindestens eine Steuerschieber mit mehreren einander zugeordneten Kanälen versehen, wobei in einer ersten Stellung des Steuerschiebers das nicht enthärtete Wasser durch einen ersten Austauscherharz enthaltenden Behälter hindurchführbar ist, wodurch es enthärtet wird und durch den zweiten Austauscherharz enthaltenden Behälter eine wäßrige Alkalichloridlösung, insbesondere eine wäßrige Natriumchloridlösung, zur Regenerierung des in diesem Behälter befindlichen Austauscherharzes hindurchführbar ist, in einer weiteren Stellung des Steuerschiebers durch den ersten Behälter Spülwasser hindurchführbar ist und in weiteren Stellungen des Steuerschiebers das nicht enthärtete Wasser durch den zweiten Behälter hindurchführbar ist sowie das im ersten Behälter befindliche Austauscherharz regenerierbar und spülbar ist. Dabei ist erfindungsgemäß der mindestens eine Steuerschieber mit einem Kanal ausgebildet, durch welchen ein Teil des im ersten Behälter enthärteten Wassers zur Herstellung der wäßrigen Alkalichloridlösung, insbesondere der wäßrigen Natriumchloridlösung, verwendet wird und ist der Steuerschieber weiters mit einem Kanal ausgebildet, durch welchen ein Teil des im ersten Behälter enthärteten Wassers mit einer der Anschlußleitungen des zweiten Behälters verbindbar ist, wodurch das in diesem Behälter befindliche Austauscherharz spülbar ist.

Vorzugsweise ist das Steuergerät durch ein zylindrisches Gehäuse gebildet, welches mit zwei zylindrischen Bohrungen ausgebildet ist, in welche zylindrische Schieber eingesetzt sind, wobei das zylindrische Gehäuse mit vier radial verlaufenden Kanälen für den Anschluß der zu den Behältern führenden Leitungen und mit drei weiteren radial verlaufenden Kanälen für den Anschluß an den Alkalichlorid, insbesondere Natriumchlorid, enthaltenden Behälter sowie den Anschluß an einen Abwasserkanal ausgebildet ist, sind zwischen den Bohrungen mehrere Kanäle vorgesehen und sind die Steuerschieber mit Kanälen und mit über ihren Umfang verlaufenden Nuten ausgebildet, wobei die in den Steuerschiebern vorgesehenen Kanäle und Nuten mit den im Gehäuse vorgesehenen Kanälen verbindbar sind.

Nach einer bevorzugten Ausführungsform ist weiters in einem der beiden Steuerschieber ein Kanal nach Art eines Venturirohres vorgesehen, welcher mit dem im Gehäuse vorgesehenen Kanal für die Zuleitung von Alkalichlorid, insbesondere Natriumchlorid, verbindbar ist. Vorzugsweise ist weiters dieser Steuerschieber mit einer an seinem Umfang befindlichen, ringsumlaufenden Nut ausgebildet, deren Breite dem Abstand zweier zwischen den beiden Bohrungen befindlichen Kanälen angenähert gleich ist. Dabei kann dieser Steuerschieber mit zwei über seinen Umfang verlaufenden Nuten ausgebildet sein, wobei sich zwischen diesen beiden Nuten die Ausnehmung nach Art eines Venturirohres befindet. Weiters kann ein Steuerschieber mit einem ersten radial verlaufenden Kanal , welcher sich zum Gehäuse hin in zwei radial verlaufende Kanäle verzweigt und mit zwei weiteren radial gerichteten Kanälen, welche durch einen axial verlaufenden Kanal miteinander verbunden sind und welche in zwei axial verlaufende Kanälen übergehen, ausgebildet sein. Schließlich kann dieser Steuerschieber an seiner Außenseite mit zwei zwischen den radialen Kanälen befindlichen, ringsumlaufenden Nuten ausgebildet sein.

Eine erfindungsgemäße Vorrichtung besteht vorzugsweise aus einem plattenförmig ausgebildeten Steuergerät, an dessen beiden Hauptseiten Austauscherharz enthaltende Behälter angefügt, insbesondere angespritzt, sind.

Das erfindungsgemäße Verfahren und eine erfindungsgemäße Vorrichtung sind nachstehend anhand eines in der Zeichnung dargestellten Ausführungsbeispiels näher erläutert. Es zeigen:
Die Fig. 1 und Fig. 1a eine erfindungsgemäße Vorrichtung, in Seitenansicht und in Draufsicht, und
die Fig. 2 bis 7 ein in der Vorrichtung gemäß Fig. 1 vorgesehenes Steuergerät, in sechs unterschiedlichen Betriebsstellungen, jeweils im Schnitt bzw. in schematisierter Darstellung.

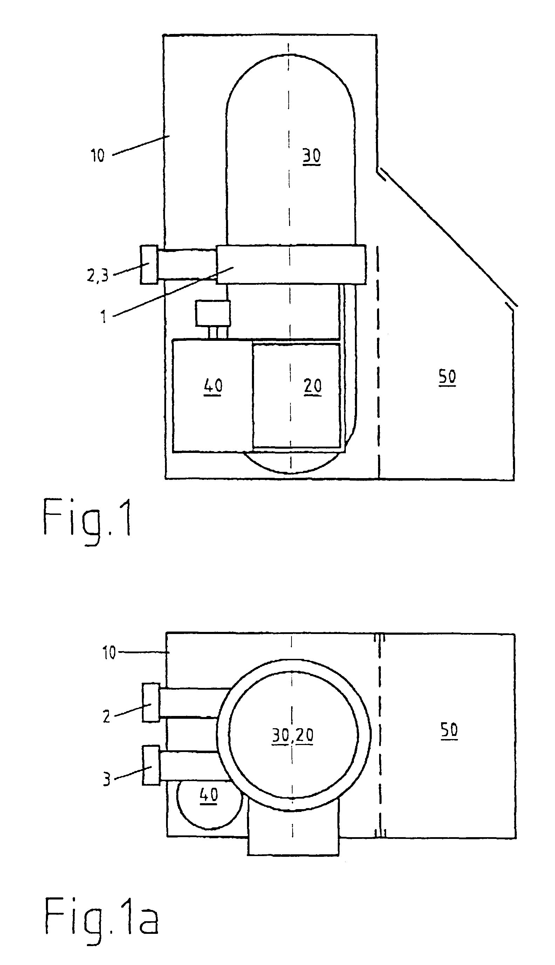

Die in den Fig. 1 und Fig. 1a dargestellte Vorrichtung besteht aus einem nachstehend erläuterten Steuergerät 1, welches von einem Gehäuse 10 umgeben ist und an welches ein Behälter 20 für ein erstes Austauscherharz und ein Behälter 30 für ein zweites Austauscherharz angefügt sind. Zudem enthält diese Vorrichtung ein Gefäß 40 für eine Natriumchloridlösung und einen Behälter 50 für einen Salzvorrat. Vom Steuergerät 1 ragen zwei Anschlußstutzen 2 und 3 ab, durch welche hindurch hartes Wasser zuführbar ist bzw. enthärtetes Wasser abführbar ist.

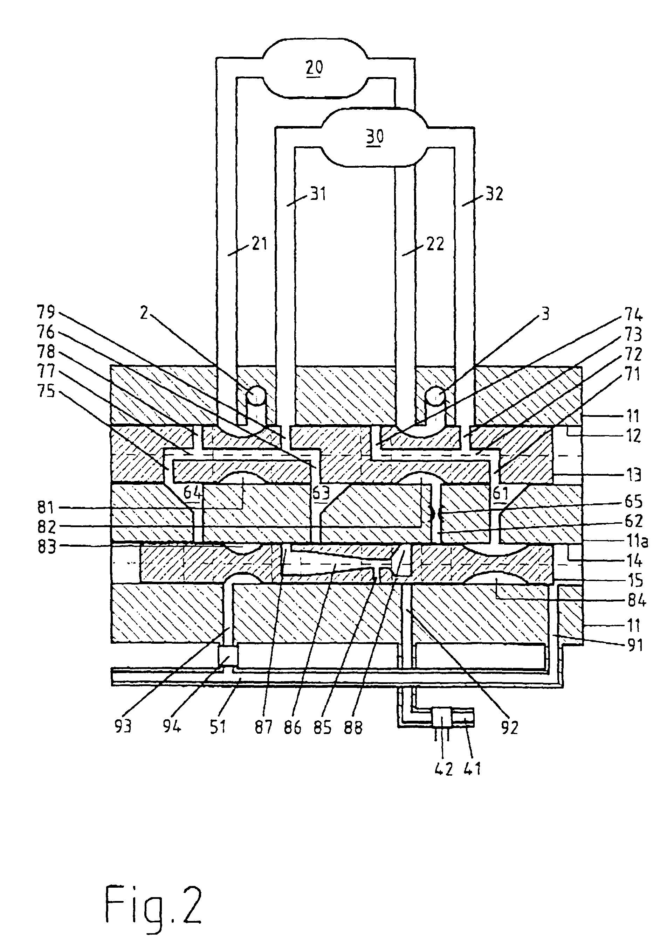

Wie dies aus Fig. 2 ersichtlich ist, besteht das Steuergerät 1 aus einem z.B. zylindrischen Gehäuse 11, welches mit zwei zylindrischen Bohrungen 12 und 14 ausgebildet ist, wobei in diese Bohrungen 12 und 14 zwei zylindrische Steuerschieber 13 und 15 eingesetzt sind. Das Gehäuse 11 ist mit den Anschlußleitungen 2 und 3 für die Zuleitung von hartem Wasser und für die Ableitung von enthärtetem Wasser ausgebildet. Weiters ist das Gehäuse 11 mit Anschlußleitungen 21 und 22 für den ersten Behälter 20 und mit Anschlußleitungen 31 und 32 für den zweiten Behälter 30 versehen. Zudem ist das Gehäuse 11 mit einer Anschlußleitung 41, in welcher sich eine Elektrolysezelle 42 befindet und welche zum Behälter 40 für die Natriumchloridlösung führt, und mit einer Anschlußleitung 51, welche zu einem Abwasserkanal führt, ausgebildet.

Der zwischen den beiden Bohrungen 12 und 14 befindliche Teil 11a des Gehäuses 11 ist mit vier Kanälen 61 bis 64 ausgebildet, wobei sich die Kanäle 61, 63 und 64 zur Bohrung 12 hin kegelförmig erweitern. Weiters ist im Kanal 62 ein Druckminderventil 65 angeordnet.

Der erste Steuerschieber 13 ist mit einem radialen Kanal 71 ausgebildet, welcher vom Gehäuseteil 11a ausgeht und sich über einen axialen Kanal 72 in zwei radiale Kanäle 73 und 74 verzweigt, welche im äußeren Bereich des Gehäuses 11 münden. Weiters sind im ersten Steuerschieber 13 zwei radiale Kanäle 75 und 76 vorgesehen, welche in einen axialen Kanal 77 übergehen, an welchen zwei radiale Kanäle 78 und 79 anschließen. Zudem ist der erste Steuerschieber 13 mit zwei an seinem Umfang angeordneten, ringsumlaufenden Nuten 81 und 82 ausgebildet. Der zweite Steuerschieber 15 ist mit zwei an seinem Umfang angeordneten, ringsumlaufenden Nuten 83 und 84 ausgebildet. Zwischen diesen Nuten 83 und 84 befindet sich ein radialer Kanal 85, welcher in einer Ausnehmung 86 nach der Art eines Venturirohres mündet, wobei an diese Ausnehmung 86 zwei radiale Kanäle 87 und 88 anschließen, welche im Bereich des Gehäuseteiles 11a münden.
Im unteren Gehäuseteil sind drei radiale Kanäle 91, 92 und 93 vorgesehen. An den Kanal 93 schließt eine Steuereinrichtung 94 an.

In Fig. 2 ist diejenige Stellung des Steuergerätes 1 dargestellt, in welcher hartes Wasser durch den ersten Behälter 20 hindurchtgeleitet wird, wodurch es enthärtet wird. Dabei strömt das harte Wasser durch die Eingangsleitung 2 in das Gehäuse 11 ein. Von der Leitung 2 gelangt es über die Nut 81 in die Leitung 21, worauf es den Behälter 20 durchströmt, wodurch ihm das enthaltene Calcium und Magnesium entzogen werden, sodaß es enthärtet wird. Vom Behälter 20 gelangt das enthärtete Wasser über die Leitung 22 in die Nut 82, durch welches es in die Ausgangsleitung 3 für das enthärtete Wasser gelangt.

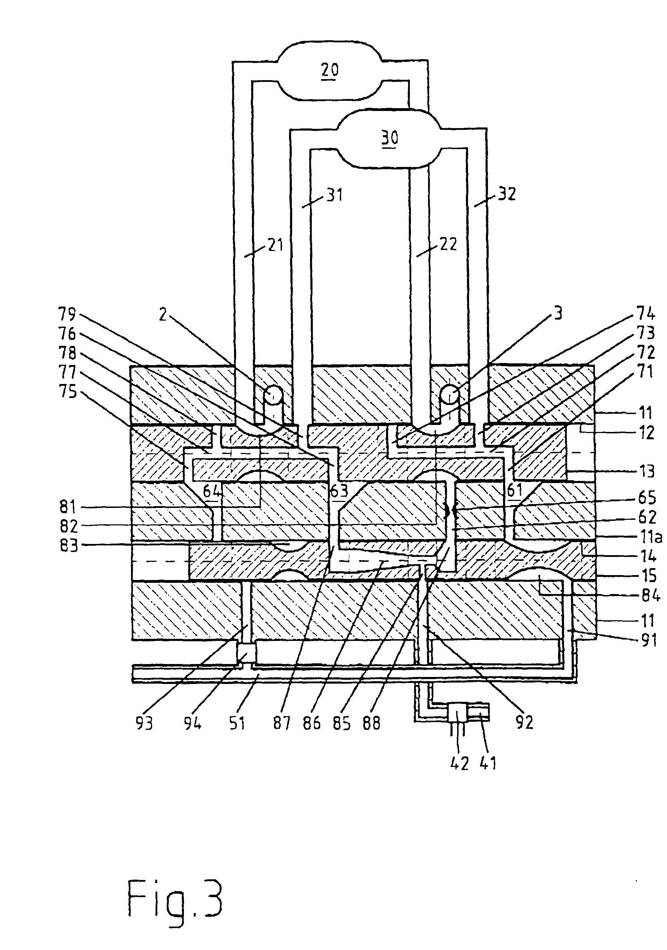

Soferne gleichzeitig auch eine Regenerierung des im zweiten Behälter 30 enthaltenen Austauscherharzes bewirkt werden soll, wird der zweite Steuerschieber 15, wie dies in Fig. 3 dargestellt ist, nach rechts verschoben. Hierdurch gelangt im Behälter 20 enthärtetes Wasser über die Nut 82 und den Kanal 62 in den Kanal 88 und von dort in die Ausnehmung 86, wodurch infolge der auf den Kanal 85 ausgeübten Saugwirkung über den Kanal 92 aus der Leitung 41 Natriumchlorid angesaugt wird. Die hierdurch erzeugte wäßrige Natriumchloridlösung gelangt über die Kanäle 87, 63, 76, 77 und 79 in die Leitung 31, von welcher sie das im Behälter 30 befindliche Austauscherharz im Gleichstrom durchsetzt. Hierdurch wird das im Behälter 30 befindliche Austauscherharz dadurch regeneriert, daß das vorhandene Calcium durch Natrium ersetzt wird. Die hierdurch entstehende Kaliumchloridlösung gelangt über die Leitung 32, die Kanäle 73, 72, 71, 61, die Nut 84 und den Kanal 91 in die Leitung 51, über welche sie zum Abwasserkanal abgeführt wird.

Das Druckminderventil 65 dient dazu, einen vorgegebenen Druck einzustellen, mit welchem das enthärtete Wasser durch das Venturirohr hindurch in die Katalysatoren eingeleitet wird.
Die Elektrolysezelle 42 dient dazu, im Natriumchlorid Chlor zu erzeugen, durch welches gleichzeitig mit der Regeneration der Austauscherharze deren Desinfektion bewirkt wird.
Das Steuerventil 94 dient dazu, bei der Rückspülung der Katalysatoren eine Mengenbegrenzung des durch diese hindurchströmenden, enthärteten Wassers zu bewirken.

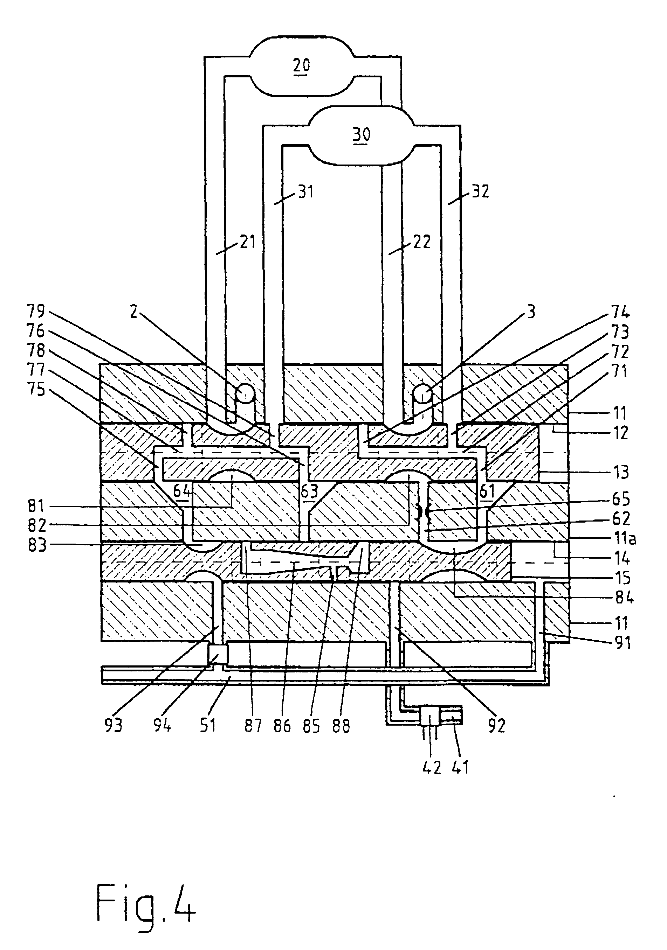

Sobald der Regenerierungsvorgang abgeschlossen wurde und das im Behälter 30 befindliche Austauscherharz gespült werden soll, wird der zweite Steuerschieber 15 nach links in die in Fig. 4 dargestellte Stellung verschoben. Hierdurch gelangt das im ersten Behälter 20 enthärtete Wasser aus der Leitung 22 über die Nut 82, den Kanal 62, die Nut 84, den Kanal 61 und die Kanäle 71, 72 und 73 in die Leitung 32, von welcher es das im Behälter 30 befindliche Austauscherharz im Gegenstrom durchsetzt. Über die Leitung 31 gelangt das Spülwasser durch die Kanäle 79, 77, 75, 64, die Nut 83 und den Kanal 93 in die Abwasserleitung 51, über welche es in den Abwasserkanal abströmt.

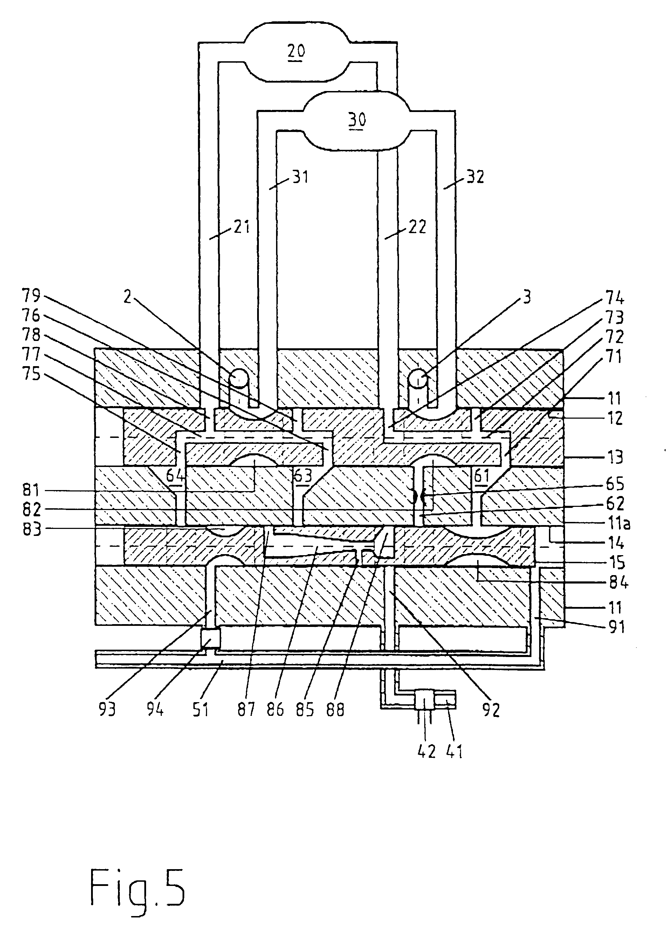

Sobald in weiterer Folge die Enthärtung des Wassers durch den zweiten Behälter 30 vorgenommen werden soll, wird, wie dies in Fig. 5 dargestellt ist, ausgehend von der Stellung der beiden Steuerschieber 13 und 15 gemäß Fig. 2 der erste Steuerschieber 13 nach rechts verschoben. Hierdurch strömt das harte Wasser durch die Eingangsleitung 2 über die Nut 81 in die Leitung 31, worauf es den Behälter 30 durchströmt, wodurch ihm das enthaltene Calcium und Magnesium entzogen werden, sodaß es enthärtet wird. Vom Behälter 30 gelangt das enthärtete Wasser über die Leitung 30 in die Nut 82, durch welches es in die Ausgangsleitung 3 für das enthärtete Wasser gelangt.

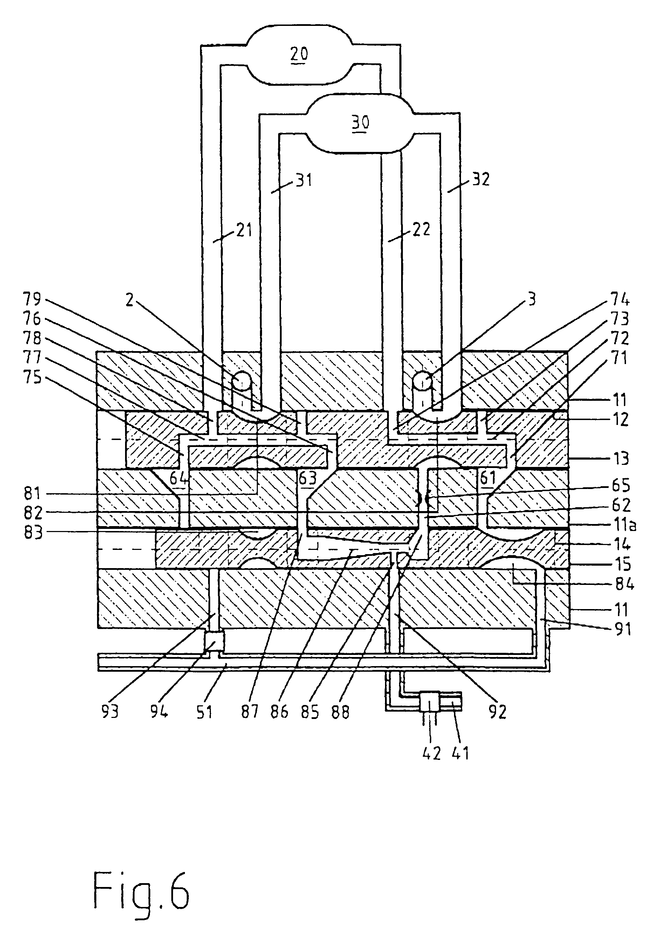

Soferne gleichzeitig auch eine Regenerierung des im ersten Behälter 20 enthaltenen Austauscherharzes bewirkt werden soll, wird auch der zweite Steuerschieber 15, wie dies in Fig. 6 dargestellt ist, nach rechts verschoben. Hierdurch gelangt im Behälter 30 enthärtetes Wasser über die Nut 82 und den Kanal 62 in den Kanal 88 und von dort in die Ausnehmung 86, wodurch infolge der auf den Kanal 85 ausgeübten Saugwirkung über den Kanal 92 aus der Leitung 41 Natriumchlorid angesaugt wird. Die hierdurch erzeugte wäßrige Natriumchloridlösung gelangt über die Kanäle 87, 63, 76, 77 und 78 in die Leitung 21, von welcher sie das im Behälter 20 befindliche Austauscherharz im Gleichstrom durchsetzt. Hierdurch wird auch das im Behälter 20 befindliche Austauscherharz dadurch regeneriert, daß das vorhandene Calcium und Magnesium durch Natrium ersetzt wird. Die hierdurch entstehende Calciumchlorid- und Magnesiumchloridlösungen gelangen über die Leitung 22, die Kanäle 74, 72, 71, 61, die Nut 84 und den Kanal 91 in die Leitung 51, über welche sie zum Abwasserkanal abgeführt wird.

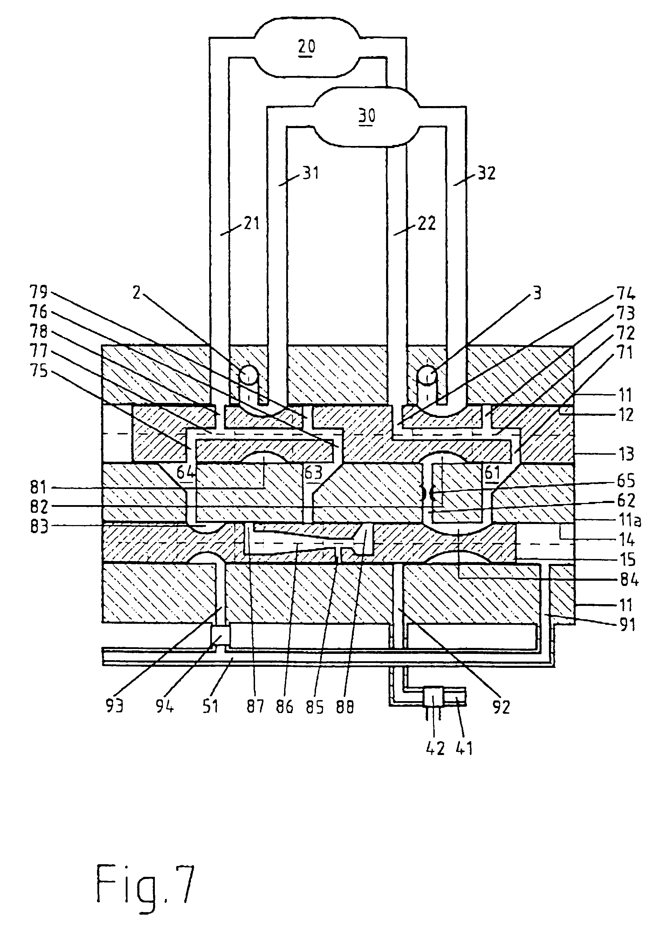

Sobald der Regenerierungsvorgang abgeschlossen wurde und das im Behälter 20 befindliche Austauscherharz auch gespült werden soll, wird der zweite Steuerschieber 15 nach links in die in Fig. 7 dargestellte Stellung verschoben. Hierdurch gelangt das im ersten Behälter 30 enthärtete Wasser aus der Leitung 32 über die Nut 82, den Kanal 62, die Nut 84, den Kanal 61 und die Kanäle 71, 72 und 74 in die Leitung 22, von welcher es das im Behälter 20 befindliche Austauscherharz im Gegenstrom durchsetzt. Über die Leitung 21 gelangt das Spülwasser durch die Kanäle 78, 77, 75, 64, die Nut 83 und den Kanal 93 in die Abwasserleitung 51, über welche es in den Abwasserkanal abströmt.

Dadurch, daß für die Regenerierung und Spülung der Austauscherharze enthärtetes Wasser verwendet wird, werden die Austauscherharze durch den Regeneriervorgang und den Spülvorgang nicht mit Salzen, insbesondere mit Calcium und Magnesium, beladen, wodurch für einen gegebenen Wasserdurchsatz geringere Mengen an Austauscherharz erforderlich sind. Hierdurch kann ein derartiges Gerät sehr kompakt ausgeführt werden.

Gemäß dem in den Fig. 1 und 1a dargestellten Ausführungsbeispiel kann ein derartiges Gerät durch ein plattenförmiges Steuergerät gebildet sein, an dessen eine Seite ein erster Behälter für ein Austauscherharz und an dessen zweite Seite ein zweiter Behälter für ein Austauscherharz angesetzt sind. Vorzugsweise ist das Gehäuse für das Steuergerät aus einem Kunststoff gefertigt und sind die beiden Behälter an das Gehäuse angespritzt.

## Patentansprüche

1. Verfahren zum Enthärten von Wasser durch Führung des Wassers durch ein Austauscherharz, welches im Wasser befindliche Salze, insbesondere Calcium und Magnesium, aufnimmt, und zum Regenerieren des mit Salzen, insbesondere Calcium und Magnesium, beladenen Austauscherharzes mittels einer wäßrigen Alkalichloridlösung, insbesondere einer Natriumchloridlösung, welche durch das Austauscherharz hindurchgeleitet wird, wodurch die Salze durch ein Alkali, insbesondere durch Natrium, ersetzt werden, sowie anschließendes Spülen des Austauscherharzes zur Entfernung von in diesem befindlichen Alkalichlorid, insbesondere Natriumchlorid und Calciumchlorid, dadurch gekennzeichnet, daß zur Herstellung der wäßrigen Alkalichloridlösung, insbesondere Natriumchloridlösung, und für den Spülvorgang durch dieses Verfahren erzeugtes enthärtetes Wasser herangezogen wird.

2. Verfahren nach Patentanspruch 1, dadurch gekennzeichnet, daß nicht enthärtetes Wasser durch ein erstes Austauscherharz hindurchgeleitet wird und daß ein Teil des hierdurch erzeugten, enthärteten Wassers zur Herstellung einer wäßrigen Alkalichloridlösung, insbesondere einer wäßrigen Natriumchloridlösung, herangezogen wird, welche durch ein zweites Austauscherharz hindurchgeleitet wird, sowie in der Folge mittels eines Teiles des im ersten Austauscherharz erzeugten enthärteten Wassers die Spülung des zweiten Austauscherharzes erfolgt und daß nach der Erschöpfung des ersten Austauscherharzes das nicht enthärtete Wasser durch das zweite Austauscherharz hindurchgeleitet wird und ein Teil des hierdurch erzeugten enthärteten Wassers zur Regenerierung und Spülung des ersten Austauscherharzes herangezogen wird.

3. Verfahren nach einem der Patentansprüche 1 und 2, dadurch gekennzeichnet, daß in an sich bekannter Weise die Regenerierung des jeweiligen Austauscherharzes im Gleichstrom und die Spülung des jeweiligen Austauscherharzes im Gegenstrom erfolgt.

4. Vorrichtung zum Enthärten von Wasser mittels eines Austauscherharzes mit zwei Behältern [20, 30], in welchen sich Austauscherharz befindet und mit einem mit mindestens einen Steuerschieber [13, 15] ausgebildeten Steuergerät [1], welches mit den Anschlußleitungen der beiden Behälter [20, 30] verbunden ist, wobei das Steuergerät [1] und der mindestens eine Steuerschieber [13, 15] mit mehreren einander zugeordneten Kanälen ausgebildet sind, wobei in einer ersten Stellung des Steuerschiebers [13] das nicht enthärtete Wasser durch einen ersten Behälter [20] hindurchführbar ist, wodurch es enthärtet wird und durch den zweiten Behälter [30] eine wäßrige Alkalichloridlösung, insbesondere eine wäßrige Natriumchloridlösung, zur Regenerierung des in diesem Behälter [30] befindlichen Austauscherharzes hindurchführbar ist, in einer weiteren Stellung des Steuerschiebers [13] durch den ersten Behälter [20] Spülwasser hindurchführbar ist und in weiteren Stellungen des Steuerschiebers [15] das nicht enthärtete Wasser durch den zweiten Behälter [30] hindurchführbar ist sowie das im ersten Behälter [20] befindliche Austauscherharz regenerierbar und spülbar ist, dadurch gekennzeichnet, daß der mindestens eine Steuerschieber [15] mit einem Kanal [88, 86, 87] ausgebildet ist, durch welchen ein Teil des in einem ersten Behälter [20] enthärteten Wassers zur Herstellung der wäßrigen Alkalichloridlösung, insbesondere der wäßrigen Natriumchloridlösung, verwendet wird und daß der Steuerschieber [15] weiters mit einem Kanal [84] ausgebildet ist, durch welchen ein Teil des im ersten Behälter [20] enthärteten Wassers mit einer der Anschlußleitungen [32] des zweiten Behälters verbindbar ist, wodurch das in diesem Behälter [30] befindliche Austauscherharz spülbar ist.

5. Vorrichtung nach Patentanspruch 4, dadurch gekennzeichnet, daß das Steuergerät [1] durch ein zylindrisches Gehäuse [11] gebildet ist, welches mit zwei zylindrischen Bohrungen [12, 14] ausgebildet ist, in welche zylindrische Schieber [13, 15] eingesetzt sind, wobei das zylindrische Gehäuse [11] mit vier radial verlaufenden Kanälen für den Anschluß der zu den Behältern [20, 30] führenden Leitungen [21, 22, 31, 32] und mit drei weiteren radial verlaufenden Kanälen [91, 92, 93] für den Anschluß an den Alkalichlorid, insbesondere Natriumchlorid, enthaltenden Behälter sowie den Anschluß an einen Abwasserkanal ausgebildet ist, daß zwischen den Bohrungen mehrere Kanäle [61 bis 64] vorgesehen sind und daß die Steuerschieber [13, 15] mit Kanälen [71 bis 79, 85 bis 87] und mit über ihren Umfang verlaufenden Nuten [81 bis 84] ausgebildet sind, wobei die in den Steuerschiebern [13, 15] vorgesehenen Kanäle und Nuten mit den im Gehäuse [11, 11a] vorgesehenen Kanälen verbindbar sind.

6. Vorrichtung nach Patentanspruch 5, dadurch gekennzeichnet, daß in einem der beiden Steuerschieber [13, 15] ein Kanal [86] nach Art eines Venturirohres vorgesehen ist, wobei der Querkanal [85] mit dem im Gehäuse [11] vorgesehenen Kanal [92] für die Zuleitung von Alkalichlorid, insbesondere Natriumchlorid, verbindbar ist.

7. Vorrichtung nach Patentanspruch 6, dadurch gekennzeichnet, daß dieser Steuerschieber [15] mit einer an seinem Umfang befindlichen ringsumlaufenden Nut [84] ausgebildet ist, deren Breite dem Abstand zweier zwischen den beiden Bohrungen befindlichen Kanälen [61, 62] angenähert gleich ist.

8. Vorrichtung nach Patentanspruch 7, dadurch gekennzeichnet, daß dieser Steuerschieber [15] mit zwei über seinen Umfang verlaufenden Nuten [83, 84] ausgebildet ist, wobei sich zwischen diesen beiden Nuten die Ausnehmung [86] nach Art eines Venturirohres befindet.

9. Vorrichtung nach einem der Patentansprüche 5 bis 7, dadurch gekennzeichnet, daß ein Steuerschieber [13] mit einem ersten radial verlaufenden Kanal [71], welcher sich zum Gehäuse [1] hin in zwei radial verlaufende Kanäle [73, 74] verzweigt und mit zwei weiteren radial gerichteten Kanälen [75, 76], welche durch einen axial verlaufenden Kanal [77] miteinander verbunden sind und welche in zwei axial verlaufende Kanälen [78, 79] übergehen, ausgebildet ist.

10. Vorrichtung nach Patentanspruch 9, dadurch gekennzeichnet, daß der Steuerschieber an seiner Außenseite mit zwei zwischen den radialen Kanälen [71, 73, 74, 75, 76, 78, 79] befindlichen, ringsumlaufenden Nuten [81, 82] ausgebildet ist.

11. Vorrichtung nach einem der Patentansprüche 4 bis 10, dadurch gekennzeichnet, daß sie durch ein plattenförmiges Steuergerät, an deren beide Hauptseiten zwei Behälter zur Aufnahme eines Austauscherharzes angesetzt sind, gebildet ist.

12. Vorrichtung nach Patentanspruch 11, dadurch gekennzeichnet, daß das Gehäuse des Steuergerätes und die beiden Behälter einstückig aus Kunststoff gespritzt sind.
